# DEMANDE DE BREVET EUROPEEN

(11) **EP 0 578 570 A1**
(43) Date de publication de la demande: **12.01.1994**
(21) Numéro de dépôt: 93401763.3
(22) Date de dépôt: 06.07.1993
(51) Int. Cl.: G07F 17/16, G06F 15/02

(54) **Dispositif de diffusion d'informations sans papier**

(30) Priorité: 08.07.1992 FR 9208475
(71) Demandeur: Benlafkih, Mostafa, Casablanca (MA)
(72) Inventeur: Benlafkih, Mostafa, Casablanca (MA)
(74) Mandataire: Phélip, Bruno

(57) **Abrégé**

L'invention concerne un dispositif de diffusion d'informations sans papier vers des utilisateurs, par exemple du grand public, comprenant :
- des moyens informatiques de composition (11, 13) de documents (71) portant les informations,
- des guichets automatiques ou moyens informatiques de distribution (21, 23) des documents (71),
- des moyens informatiques portables à écran repliable de visualisation (7) des documents (71),
- des liaisons télématiques (81) reliant les moyens informatiques de composition (11, 13) aux moyens informatiques de distribution (21, 23).

Les moyens de distribution (21-23) sont accessibles à de nombreux utilisateurs et permettent la copie de documents sur un support d'informations (76) lisible par les moyens de visualisation (7) en échange d'un paiement par l'utilisateur.

## Description

La présente invention concerne un dispositif de diffusion d'informations sans papier vers des utilisateurs, par exemple du grand public. Il permet, par exemple, de distribuer des éditions de presse sans papier. Il constitue un ensemble de moyens électroniques permettant la distribution de journaux, revues, articles ou documentations diverses, ne nécessitant pas le recours à un support-papier.

En effet, l'utilisation du support-papier pour la diffusion de la presse, des revues ou des livres, présente un certain nombre d'inconvénients que l'invention permet d'éviter.

En particulier, l'impression, bien qu'ayant été récemment considérablement modernisée, constitue une opération lourde nécessitant du stockage et l'utilisation d'un volume de papier important.

Ce papier doit ensuite être distribué, c'est-à-dire transporté par la route, le train, l'avion..., ce qui est coûteux, et peut entraîner des retards. Les documents qui n'ont pas été achetés par l'utilisateur final doivent être retournés à l'éditeur... .

Ce transport crée également des délais entre le moment où le document a été mis en page et celui où il est effectivement disponible pour le consommateur ou utilisateur final.

Une fois qu'ils ont été lus, les journaux encombrent les poubelles.

La suppression des supports-papier permet le respect de l'écologie en évitant la destruction des forêts, en limitant l'utilisation de moyens de transport polluants, et en évitant l'évacuation des déchets correspondants.

EP-A-0390611 décrit un livre électronique qui peut être alimenté soit par disquette, soit par une ligne téléphonique, soit encore par une liaison radio.

Cependant, ce document ne décrit aucun système ni dispositif de diffusion d'informations vers les utilisateurs qui permettrait la distribution de journaux, revues, articles ou documentations diverses, ne nécessitant pas le recours à un support papier.

On connaît par ailleurs des dispositifs électroniques de diffusion d'informations, par exemple sous la forme de serveur auquel sont reliés des terminaux.

Les utilisateurs, par exemple, peuvent ainsi, à partir des terminaux, accéder à un certain nombre de documents stockés dans les mémoires du serveur. Ce type de dispositif nécessite l'établissement d'une liaison télématique complète entre chaque terminal et le serveur. Les terminaux sont des dispositifs encombrants et coûteux qui doivent généralement comporter un clavier. De ce fait, leur utilisation est limitée.

La facturation des services du serveur nécessite en général le recours à un abonnement permettant d'identifier l'utilisateur.

US-4,674,055 concerne un dispositif de distribution de logiciels. Ce dispositif comprend un serveur contenant les logiciels disponibles à la clientèle, ainsi que des points de vente reliés par ligne téléphonique au serveur.

Lorsqu'un client veut acheter un programme informatique, il en choisit un au point de vente. Après avoir payé le prix de vente du programme choisi, ce programme est transmis à partir du serveur au point de vente et copié sur un support, à savoir une cassette ou une disquette. Le client reçoit alors ce support et peut ensuite s'en servir pour faire fonctionner, par exemple, un jeu. Cependant, il n'y pas accès aux informations détaillées contenues sur ce support.

Le document US-4,674,055 ne divulgue aucun moyen permettant de prendre connaissance d'informations singulières contenues dans des journaux, revues, articles ou documentations diverses. Notamment le document ne divulgue pas de possibilité de prendre connaissance de telles informations sans avoir recours à une disquette ou une cassette.

Afin de remédier aux inconvénients énoncés plus haut, l'invention concerne un dispositif de diffusion d'informations vers des utilisateurs.

Ce dispositif comprend des moyens informatiques de composition de documents portant les informations, des moyens informatiques de distribution des documents, des moyens informatiques portables de visualisation des documents, et des moyens de liaison télématique reliant les moyens informatiques de composition aux moyens informatiques de distribution.

Selon l'invention, les moyens de distribution sont accessibles à de nombreux utilisateurs et permettent la copie de documents sur un support d'informations lisible par les moyens de visualisation, en échange d'un paiement par les utilisateurs.

L'invention met à disposition des utilisateurs un réseau de distribution ou de diffusion d'informations sans papier qui comprend un livre électronique et des guichets automatiques reliés à une centrale d'informations constituée par des moyens informatiques de composition de documents portant les informations.

Ce système permet au public un accès direct et simple aux informations et éditions.

Dans un mode de réalisation préféré, les moyens de distribution sont des bornes comportant un modem, des moyens d'acquisition du paiement, un écran de dialogue avec les utilisateurs et des moyens de copie des documents sur le support d'informations.

De préférence, les moyens informatiques de visualisation comportent chacun au moins un microprocesseur, une mémoire morte, une mémoire vive, un écran plat, et un lecteur du support d'informations. Ils ont un état replié dans lequel ils ont un format de poche et un état déplié de grand format.

Le support d'informations est avantageusement une mémoire EPROM, le paiement peut être réalisé soit par des pièces ou billets de banque, soit par une carte de crédit, soit, encore, par abonnement et imputation sur le compte correspondant.

Les moyens informatiques de composition comportent avantageusement plusieurs micro-ordinateurs ou terminaux reliés à un ordinateur central.

De préférence, les liaisons télématiques comportent un ordinateur frontal, relié par des modems et des lignes de communication aux moyens de distribution.

Les moyens de distribution comportent avantageusement une sortie que l'on peut relier localement à un terminal permettant leur programmation, leur entretien ou leur dépannage.

Un mode de réalisation particulier de l'invention sera décrit ci-après, en référence aux dessins annexés, dans lesquels :
- la Figure 1 est une représentation schématique d'un moyen de distribution de l'information ;
- la Figure 2 est une représentation schématique générale du dispositif de diffusion d'informations selon l'invention ;
- la Figure 3 est une représentation schématique du site central du dispositif de diffusion d'informations ;
- la Figure 4 est une représentation schématique des moyens informatiques portables de visualisation des documents.

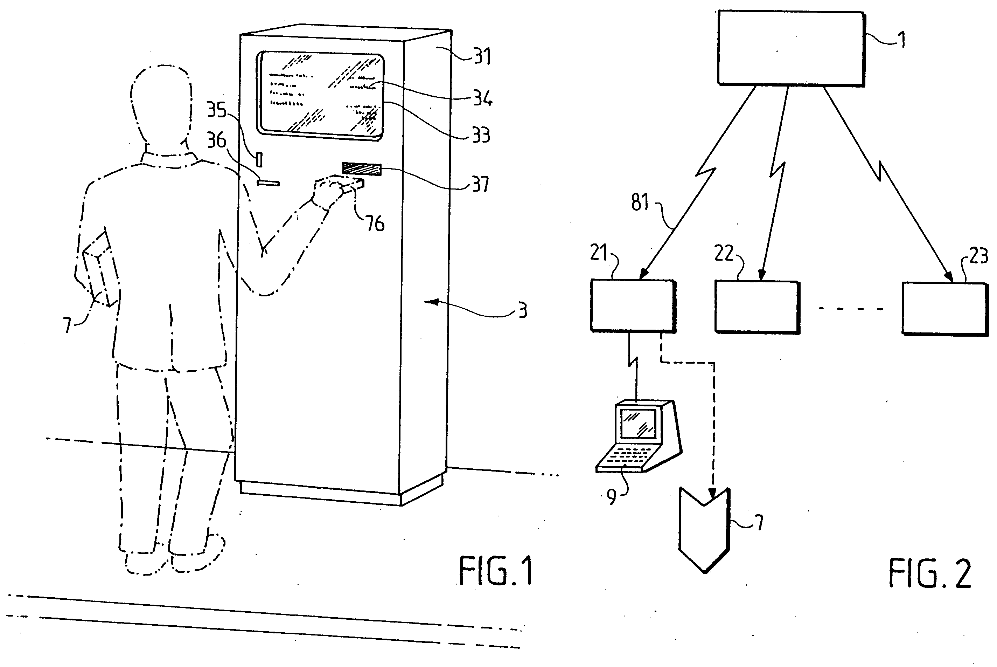

Le dispositif de diffusion d'informations vers des utilisateurs comprend trois groupes de moyens ou niveaux représentés sur la Figure 2.

Le site central 1 permet la composition des documents 71 destinés aux utilisateurs et leur diffusion vers des sites distributeurs 21 à 23. C'est le premier niveau.

Cette diffusion est faite par des lignes télématiques 81-83.

L'ensemble des moyens informatiques de distribution 21 à 23 forme le deuxième niveau, auprès duquel l'utilisateur final peut s'approvisionner de manière à disposer des documents qu'il souhaite pouvoir consulter. Les moyens de distribution 21-23 sont des guichets automatiques ou kiosques, auprès desquels le grand public peut obtenir les informations ou éditions dont il a besoin.

A cet effet, les utilisateurs disposent chacun de moyens informatiques portables de visualisation des documents 71, qui forment le troisième niveau.

Les moyens informatiques de distribution 21-23 des documents 71 sont placés dans des sites distributeurs accessibles aux utilisateurs.

Lorsque l'utilisateur souhaite disposer d'un document 71, par exemple d'un journal, d'une revue..., il se présente au site distributeur, où les moyens de distribution 21-23 comportent des moyens permettant la sélection de l'un des documents disponibles et sa copie sur un support d'informations 76 lisible par les moyens de visualisation 7 de l'utilisateur final.

Cette copie est faite en échange du paiement correspondant par l'utilisateur.

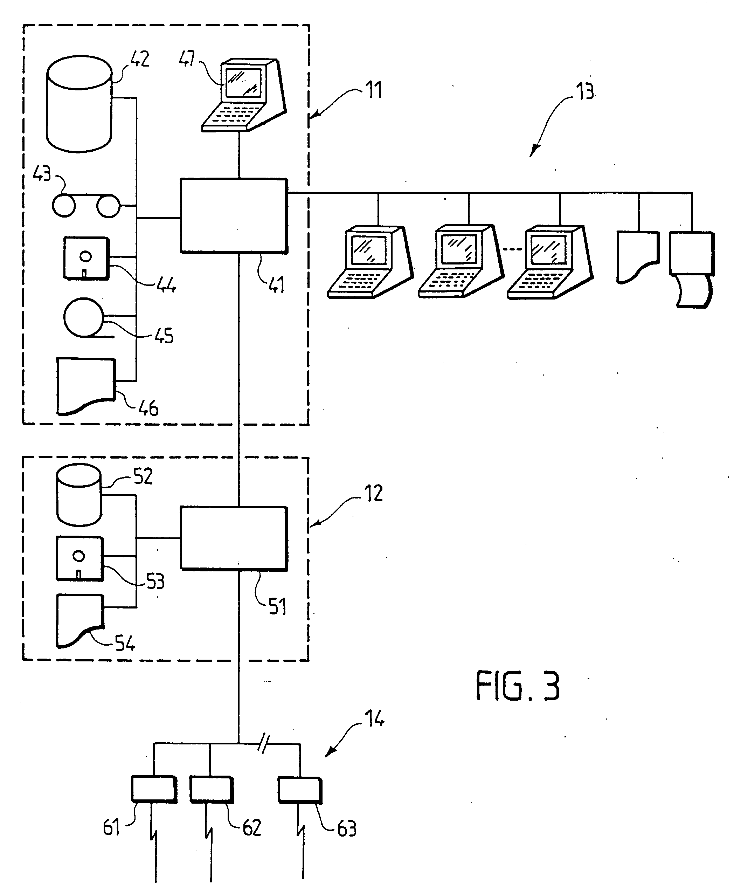

Les documents destinés à l'utilisateur sont élaborés sur le site central, représenté à la Figure 3, à partir des terminaux 13 qui sont reliés par un réseau local à une unité centrale 41.

Les terminaux 13 comportent l'ensemble des moyens disponibles pour l'élaboration de documents, tels que les micro-ordinateurs équipés des différents logiciels de traitement de texte, de dessins, de mise en page..., des lecteurs divers permettant de reprendre des documents déjà disponibles sur des supports magnétiques, ou mémoires compatibles avec les systèmes informatiques, des scanners....

L'unité centrale 41 comporte l'ensemble des périphériques 42 à 46 habituellement disponibles sur les sites informatiques, ainsi qu'une console 47 destinée à la vérification de son propre fonctionnement.

Après que les documents 71 aient été élaborés à l'aide des terminaux 13, ils sont transférés via l'unité centrale 41 vers l'un des moyens de stockage, par exemple la mémoire 42.

L'ordinateur central 11 est relié à un ordinateur frontal 12, lui-même composé d'une unité centrale 51 et des périphériques 52 à 54, qui permet de relier l'ordinateur central 11 aux réseaux télématiques 81 à 83 par l'ensemble des modems 14, 61 à 63.

Les moyens de distribution 21-23 sont reliés par les lignes 81 à 83 à l'unité centrale 41.

La Figure 1 représente l'un de ces moyens de distribution, et qui a ici la forme d'une borne 31. Cette borne comporte un écran 33, par exemple un écran tactile, permettant à la fois la visualisation d'informations 34 et la saisie, par l'utilisateur, d'informations permettant par exemple la sélection du document qu'il recherche.

Ces moyens de distribution comportent de préférence un modem, des moyens d'acquisition 35, 36 du paiement par l'utilisateur et des moyens 37 de copie des documents 7 sur un support d'informations 76.

Le paiement par l'utilisateur peut être réalisé par pièces ou billets de banque, par carte de crédit ou par abonnement.

De préférence, les moyens de distribution 21-23 permettent chacun le paiement par l'un quelconque de ces moyens et comportent donc des dispositifs de reconnaissance et de comptage des pièces ou billets, de lecture des cartes de crédit, d'acquisition d'un numéro d'abonnement....

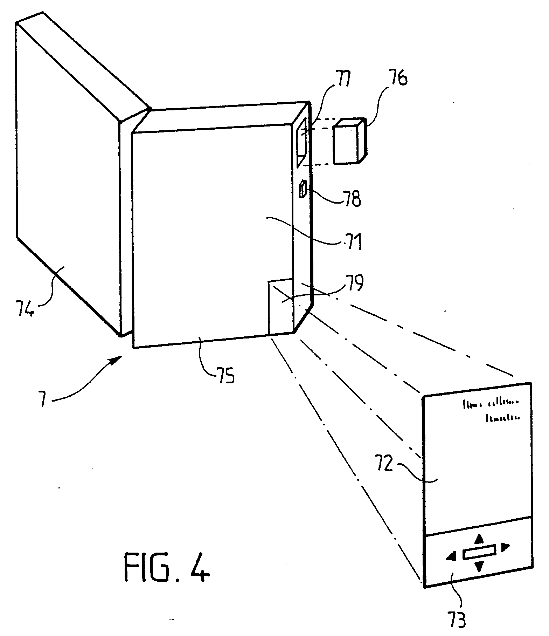

Les moyens informatiques portables 7 de visualisation des documents 71 sont représentés sur la Figure 4. Ils sont de préférence pliables et peuvent comporter au moins deux écrans 74 et 75 formant un tout lorsqu'ils sont ouverts.

Ainsi, ils peuvent avoir, à l'état replié, un format réduit dit "de poche" et, à l'état déplié, un format plus important permettant la lecture facile des documents. Il n'est pas nécessaire qu'ils comportent un clavier et généralement n'en comportent pas.

Ils ont de préférence un écran tactile, au moins sur l'une de leurs pages 71, de manière à permettre par une fenêtre 73 de produire le positionnement des pages 74 et 75 visualisées dans l'ensemble du document 71.

Avantageusement, une fenêtre 72 est réalisée pour afficher le sommaire de la page correspondante.

Bien entendu, les fenêtres 73 et 72 sont avantageusement obtenues par une gestion du logiciel dans la page 75.

Des moyens 77 permettent la lecture par les moyens informatiques de visualisation 7 du support d'informations 76.

On prévoit avantageusement un dispositif de mise sous tension 78.

Le fonctionnement général du dispositif de diffusion d'informations est donc le suivant.

Les documents sont élaborés ou regroupés sur le site central où ils sont mis en mémoire. Ces document sont alors accessibles à partir des moyens informatiques de distribution 21 à 23.

Selon différents modes de réalisation, il pourra être préféré une mémoire locale dans les sites distributeurs, de manière à rendre disponibles les documents, sans recourir aux lignes télématiques 81 et 83 au moment même de la demande. La mise à jour ou le remplacement des documents est fait par la ligne télématique.

Dans d'autres réalisations, ou pour des documents peu demandés, le stockage ne sera réalisé que sur le site central et la liaison télématique sera établie entre les moyens de distribution et le site central, au moment même de la demande de l'utilisateur.

L'utilisateur dispose d'au moins un moyen informatique portable de visualisation 7 équipé d'un support d'informations 76.

Lorsqu'il se présente devant l'un des moyens de distribution ou guichets automatiques 21-23, un menu lui demande de connecter son support d'informations 76 au moyen 37 des moyens de distribution 21-23.

Il lui est alors demandé par consultation d'un ensemble de menus et sélections, ou par sélection par mots-clés..., de choisir le document auquel il souhaite accéder.

Le prix de de document est alors affiché et il est demandé à l'utilisateur de procéder au paiement.

A cet effet, l'utilisateur donne son numéro d'abonnement, ou introduit les pièces ou billets de banque, ou sa carte de crédit.

Les moyens de distribution sélectionnent alors le document demandé et en effectuent la copie sur le support d'informations 76.

Le support d'informations 76 peut être, soit lui-même détachable des moyens de visualisation 7, ou encore il est possible qu'il en reste solidaire et que l'ensemble de ces moyens de visualisation soit connecté aux moyens distributeurs 21-23 pendant le transfert.

Le support d'informations 76 est avantageusement une EPROM.

L'ordinateur central 11 permet également la gestion administrative de l'ensemble du système, y compris les opérations de facturation, d'archivage....

Il assure également la gestion du réseau local.

Ce dispositif de diffusion d'informations est donc économique et ne comporte que des éléments matériels réutilisables.

Il permet une consultation simple et efficace des documents transférés sur le support d'informations, et il bénéficiera de tous les perfectionnements qui seront progressivement apportés aux systèmes informatiques.

Les signes de référence, insérés après les caractéristiques techniques mentionnées dans les revendications, ont pour seul but de faciliter la compréhension de ces dernières, et n'en limitent aucunement la portée.

## Revendications

1. Dispositif de diffusion d'informations vers des utilisateurs comprenant :
- des moyens informatiques de composition (11, 13) de documents (71) portant les informations,
- des moyens informatiques de distribution (21, 23) des documents (71),
- des moyens informatiques portables de visualisation (7) des documents (71),
- des liaisons télématiques (81) reliant les moyens informatiques de composition (11, 13) aux moyens informatiques de distribution (21, 23),
caractérisé en ce que les moyens de distribution (21-23) sont accessibles à de nombreux utilisateurs et permettent la copie de documents sur un support d'informations (76) lisible par les moyens de visualisation (7) en échange d'un paiement par l'utilisateur.

2. Dispositif de diffusion d'informations selon la revendication 1, caractérisé en ce que les moyens de distribution (3) sont des bornes comportant un modem, des moyens d'acquisition du paiement (35, 36), un écran (33) de dialogue avec les utilisateurs, et des moyens (37) de copie des documents (7) sur le support d'informations (76).

3. Dispositif de diffusion d'informations selon l'une des revendications 1 et 2, caractérisé en ce que les moyens informatiques de visualisation (7) comportent chacun au moins un microprocesseur, une mémoire morte, une mémoire vive, un écran plat, et un lecteur (77) du support d'informations (76), qu'ils ont un état replié dans lequel ils ont un format de poche, et un état déplié de grand format.

4. Dispositif de diffusion d'informations selon l'une quelconque des revendications 1 à 3, caractérisé en ce que le support d'informations (76) est une mémoire EPROM.

5. Dispositif de diffusion d'informations selon l'une quelconque des revendications 2 à 4, caractérisé en ce que le paiement est réalisé par pièces ou billets de banque.

6. Dispositif de diffusion d'informations selon l'une quelconque des revendications 2 à 4, caractérisé en ce que le paiement est fait par carte de crédit.

7. Dispositif de diffusion d'informations selon l'une quelconque des revendications 2 à 4, caractérisé en ce que le paiement est fait par abonnement.

8. Dispositif de diffusion d'informations selon l'une quelconque des revendications 1 à 7, caractérisé en ce que les moyens informatiques de composition (11, 13) comportent plusieurs micro-ordinateurs ou terminaux (13) reliés à un ordinateur central (11).

9. Dispositif de diffusion d'informations selon l'une quelconque des revendications 1 à 8, caractérisé en ce que les liaisons télématiques (8) comportent un ordinateur frontal (12), relié par des modems (14) et des lignes de communication aux moyens de distribution (3).

10. Dispositif de diffusion d'informations selon l'une quelconque des revendications 1 à 9, caractérisé en ce que les moyens de distribution (3) comportent une sortie que l'on peut relier localement à un terminal (9) permettant leur programmation, leur entretien ou leur dépannage.
